# DEMANDE DE BREVET EUROPEEN

(11) **EP 2 072 869 A1**
(43) Date de publication de la demande: **24.06.2009**
(21) Numéro de dépôt: 08291154.6
(22) Date de dépôt: 08.12.2008
(51) Int. Cl.: F16J 15/32, F16C 33/76

(54) **Joint d'étanchéité instrumenté à système autonome de mesure**

(30) Priorité: 18.12.2007 FR 0708883
(71) Demandeur: SNR Roulements, 74000 Annecy (FR)
(72) Inventeur: Nantua, René, 74330 Sillingy (FR); Desbiolles, Pascal, 74570 Thorens Glieres (FR)
(74) Mandataire: Sayettat, Julien Christian

(57) **Abrégé**

L'invention concerne un joint d'étanchéité instrumenté pour un palier, ledit joint comprenant une armature interne (1) et une armature externe (2) formant entre elles un espace annulaire (4) dans lequel un codeur magnétique (3) est associé à l'armature interne (1), ledit joint comprenant un élément d'étanchéité (5) qui est associé à l'une des armatures (1, 2) pour être en contact frottant sur une portée complémentaire (1c) de sorte à pouvoir étanchéifier un côté de l'espace annulaire (4), dans lequel l'espace annulaire (4) intègre en outre, associé à l'armature externe (2), un système autonome de mesure des signaux délivrés par le codeur (3), ledit système comprenant un dispositif (7) de génération d'énergie électrique induite par la rotation du codeur (3), un dispositif (8) de stockage de ladite énergie électrique, un capteur (6) alimenté en énergie électrique générée qui comprend des éléments sensibles disposés à distance de lecture du codeur (3), et un dispositif (9) de communication sans fil des signaux issus du capteur (6).

## Description

L'invention concerne un joint d'étanchéité instrumenté pour un palier, ainsi qu'un palier à roulement équipé d'au moins un tel joint.

En particulier, l'invention s'applique pour étanchéifier au moins un côté de l'espace de roulement de paliers à roulement de véhicule automobile, tout en bénéficiant d'une mesure de vitesse de rotation, de position angulaire et/ou de sens de rotation de l'organe tournant du palier.

Un tel palier instrumenté peut notamment être employé pour le montage d'une roue de véhicule automobile qui est pourvu d'un système embarqué de contrôle global du châssis. En effet, les informations issues du capteur peuvent alors être utilisées par un calculateur d'un tel système ainsi que par tous les systèmes embarqués utilisant la mesure de vitesse des roues comme donnée d'entrée.

Un des problèmes qui se pose avec de tels montages est celui de la protection du codeur vis-à-vis des polluants, en combinaison avec la protection de l'espace de roulement.

Pour résoudre ce problème, on a proposé un joint d'étanchéité à codeur magnétique intégré présentant un espace annulaire formé entre deux armatures rigides qui sont associées respectivement à l'organe fixe et à l'organe tournant du palier. L'étanchéité de l'espace annulaire est alors réalisée au moyen d'un élément souple comportant au moins une lèvre assurant un contact frottant d'étanchéité lors de la rotation du palier. Ainsi, en disposant le codeur dans l'espace annulaire, on réalise la protection du codeur et de l'espace de roulement vis-à-vis des polluants.

Toutefois, le codeur étant disposé dans l'espace annulaire, la lecture des signaux qu'il délivre est classiquement réalisée au travers d'une armature. Cette réalisation peut alors conduire à une augmentation de la taille du codeur afin d'ajuster l'amplitude des signaux délivrés à une valeur suffisante pour leur détection.

Il en résulte que la solution proposée par l'art antérieur pour assurer l'étanchéité nécessite un encombrement qui n'est pas toujours disponible dans le montage à réaliser. Par conséquent, la satisfaction de la contrainte sur l'amplitude des signaux ne peut être réalisée qu'au détriment de la fonction de protection, notamment du codeur.

Or, dans les applications envisagées, les contraintes d'étanchéité sont sévères, notamment relativement à la durée de vie souhaitée dans les conditions d'environnements auxquels les joints d'étanchéité sont soumis.

L'invention vise à résoudre les problèmes de l'art antérieur en proposant notamment un joint d'étanchéité instrumenté à codeur protégé dans lequel un système de mesure des signaux délivrés par le codeur est rendu autonome pour pouvoir être disposé en regard dudit codeur sans interposition d'une armature. La dimension du codeur peut alors être réduite et l'intégration du système autonome de mesure permet d'assurer conjointement la protection du codeur et dudit système. Par ailleurs, l'autonomie du système de mesure permet de s'affranchir de l'utilisation des fils d'alimentation électrique et de transmission des signaux mesurés, qui sont source de poids et de pannes.

A cet effet, et selon un premier aspect, l'invention propose un joint d'étanchéité instrumenté pour un palier, ledit joint comprenant une armature interne destinée à être associée à un organe tournant du palier et une armature externe destinée à être associée à un organe fixe dudit palier, lesdites armatures formant entre elles un espace annulaire dans lequel un codeur magnétique est associé à l'armature interne, ledit joint comprenant un élément d'étanchéité qui est associé à l'une des armatures pour être en contact frottant sur une portée complémentaire de sorte à pouvoir étanchéifier un côté de l'espace annulaire, dans lequel l'espace annulaire intègre en outre, associé à l'armature externe, un système autonome de mesure des signaux délivrés par le codeur, ledit système comprenant un dispositif de génération d'énergie électrique induite par la rotation du codeur, un dispositif de stockage de ladite énergie électrique, un capteur alimenté en énergie électrique générée qui comprend des éléments sensibles disposés à distance de lecture du codeur, et un dispositif de communication sans fil des signaux issus du capteur.

Selon un deuxième aspect, l'invention propose un palier à roulement comprenant un organe fixe, un organe tournant et des corps roulants disposés dans un espace de roulement formé entre lesdits organes pour permettre leur rotation relative, ledit palier étant équipé d'au moins un tel joint d'étanchéité instrumenté, l'armature interne étant associée à l'organe tournant et l'armature externe étant associée à l'organe fixe.

D'autres objets et avantages de l'invention apparaîtront dans la description qui suit, faite en référence aux figures annexées, dans lesquelles :
- la figure 1 est une vue partielle en coupe longitudinale d'un joint d'étanchéité instrumenté selon un mode de réalisation de l'invention ;
- la figure 2 est une vue partielle en coupe longitudinale de l'armature externe du joint de la figure 1, suivant un plan passant par l'ouverture du module annulaire du système autonome de mesure.

En relation avec ces figures, on décrit un joint d'étanchéité instrumenté pour un palier, notamment pour un palier à roulement ou un roulement de roue de véhicule automobile.

Le palier comprend un organe fixe, un organe tournant et des corps roulants disposés dans un espace de roulement formé entre lesdits organes pour permettre leur rotation relative. Dans les modes de réalisation décrits, l'organe tournant est intérieur par rapport à l'organe fixe, sans que cela ne limite l'invention à cette réalisation particulière.

Dans la description, les termes de positionnement dans l'espace sont pris en référence à l'axe de rotation du palier (horizontal sur les figures qui montre un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « externe » et « interne » sont relatifs à la disposition dans l'espace de roulement, à savoir à gauche sur la figure pour interne et à droite pour externe.

Pour étanchéifier un côté de l'espace de roulement, le palier est équipé d'un joint d'étanchéité qui comprend une armature interne annulaire 1 destinée à être associée à l'organe tournant et une armature externe annulaire 2 destinée à être associée à l'organe fixe. En particulier, les armatures 1, 2 peuvent être rigides en étant réalisées en matériau métallique, notamment en tôle emboutie. Selon une réalisation, chaque côté de l'espace de roulement peut être étanchéifié par respectivement un joint d'étanchéité.

Le joint d'étanchéité intègre également un codeur magnétique 3. Pour ce faire, les armatures 1, 2 sont agencées pour former entre elles un espace annulaire 4 dans lequel le codeur magnétique 3 est associé à l'armature interne 1, notamment par surmoulage.

L'armature interne 1 représentée comprend une portée radiale libre 1a sur la face externe de laquelle le codeur 3 est associé pour une lecture axiale des signaux. En outre, l'armature interne 1 présente une portée axiale intérieure 1b dont la face intérieure est emmanchée sur l'organe tournant, les portées radiale 1 a et axiale 1 b étant reliées par une portée axi-radiale de liaison 1 c.

Selon une réalisation, le codeur 3 forme un aimant multipolaire comportant 2N paires de pôles, ledit aimant étant réalisé en matériau élastomérique chargé en particules magnétiques. A titre d'exemple, le codeur 3 peut être réalisé en un copolymère butadiène nitrile-acrylique (NBR), éventuellement renforcé mécaniquement par des charges telles que du noir de carbone, les particules magnétiques pouvant être à base de ferrite. Ainsi, par magnétisation du codeur 3, on peut obtenir une pluralité de domaines contigus qui présentent une alternance régulière de pôles Nord et Sud formant une paire de pôles.

Pour protéger le codeur 3 vis-à-vis des polluants, le dispositif comprend également un élément d'étanchéité 5 qui, dans le mode de réalisation représenté, est associé, notamment par surmoulage, sur l'extrémité libre de l'armature externe 2. En particulier, l'élément d'étanchéité 5 peut être réalisé en matériau élastomère, par exemple de même nature que celui du codeur 3, notamment en copolymère butadiène nitrile (NBR), éventuellement renforcé mécaniquement par des charges telles que du noir de carbone, en NBR hydrogéné (HNBR), en fluoropolymère ou en polyacrylate.

En relation avec les figures, l'élément d'étanchéité 5 comporte un talon 5a et une lèvre d'étanchéité 5b, ladite lèvre étant disposée en contact frottant sur la portée de liaison 1 c, l'extrémité libre de l'armature externe 2 étant inclinée selon une direction sensiblement normale à ladite portée. En variante non représentée, l'élément d'étanchéité 5 peut être associé à l'armature interne 1 et/ou ledit élément d'étanchéité peut être en contact frottant sur une portée complémentaire formée sur l'un des organes du palier.

L'armature externe 2 représentée comprend une portée axiale 2a d'emmanchement sur l'organe extérieur et une portée annulaire radiale 2b dont l'extrémité libre porte l'élément d'étanchéité 5 et dont la face interne est disposée en regard du codeur 3.

Outre le codeur 3, l'espace annulaire 4 qui est étanchéifié par l'élément 5 intègre un système autonome de mesure des signaux délivrés par ledit codeur, ledit système étant associé à l'armature externe 2. Le système comprend un capteur 6 apte à mesurer la vitesse de rotation, la position angulaire et/ou le sens de rotation de l'organe tournant du palier.

Pour ce faire, le capteur 6 peut comprendre au moins deux éléments sensibles qui sont par exemple choisis dans le groupe comprenant les sondes à effet Hall, les magnétorésistances (MR), les magnétorésistances géantes (GMR), les magnétorésistances à effet tunnel (TMR), lesdits éléments étant disposés à distance de lecture des signaux émis par le codeur 3. En particulier, l'utilisation d'éléments sensibles de types GMR ou TMR est avantageuse du fait de leur faible consommation électrique.

Le capteur 6 utilisé peut notamment être selon le document FR-2 792 403 qui prévoit une pluralité d'éléments sensibles alignés et un circuit électronique qui délivre des signaux digitaux A, B carrés en quadrature qui sont représentatifs de la position angulaire du codeur 3, et donc de la l'organe tournant, par rapport au capteur fixe 6. Suivant une réalisation, le capteur 6 comprend en outre un interpolateur, par exemple du type décrit dans le document FR-2 754 063, afin d'augmenter la résolution des signaux de sortie.

Par ailleurs, le système autonome de mesure comprend un dispositif de génération 7 d'énergie électrique induite par la rotation du codeur 3, un dispositif de stockage 8 de ladite énergie ainsi qu'un dispositif de communication 9 sans fils des signaux digitaux issus du capteur 6.

En relation avec les figures, le système autonome de mesure comprend un module annulaire 10 qui est associé sur la face interne de la paroi radiale 2b, ladite association étant réalisée par surmoulage au moyen d'une résine 11. En variante, le module 10 peut comprendre un support, notamment en matière plastique, qui est associé, par exemple par collage, sur l'armature externe 2.

Le module annulaire 10 représenté comprend la superposition axiale d'une couche annulaire 8 formant dispositif de stockage d'énergie et d'une couche annulaire 7 formant dispositif de génération d'énergie, ladite couche formant dispositif de génération étant disposée axialement en regard du codeur 3. A titre d'exemple, la couche 7 de génération d'énergie peut comprendre une pluralité de bobines formée sur un circuit imprimé, lesdites bobines étant couplées au champ magnétique alternatif généré par le codeur 3 de sorte à générer l'énergie électrique nécessaire au fonctionnement du système autonome de mesure. En outre, le dispositif de stockage 8 peut être réalisé par une batterie ou par une capacité, qui est alimentée par la couche 7 de génération d'énergie.

Par ailleurs, le dispositif de communication 9 peut être sous la forme d'un module de type 868 Mhz par exemple, et comprendre une antenne 12 pour la transmission des signaux à un calculateur distant qui est utilisateur de ces signaux. Dans le mode de réalisation représenté, l'antenne 12 est imprimée sur une bande flexible longiligne (en technologie circuit Flex par exemple) et traverse la paroi radiale 2b pour s'étendre à distance de l'environnement potentiellement interférant du palier.

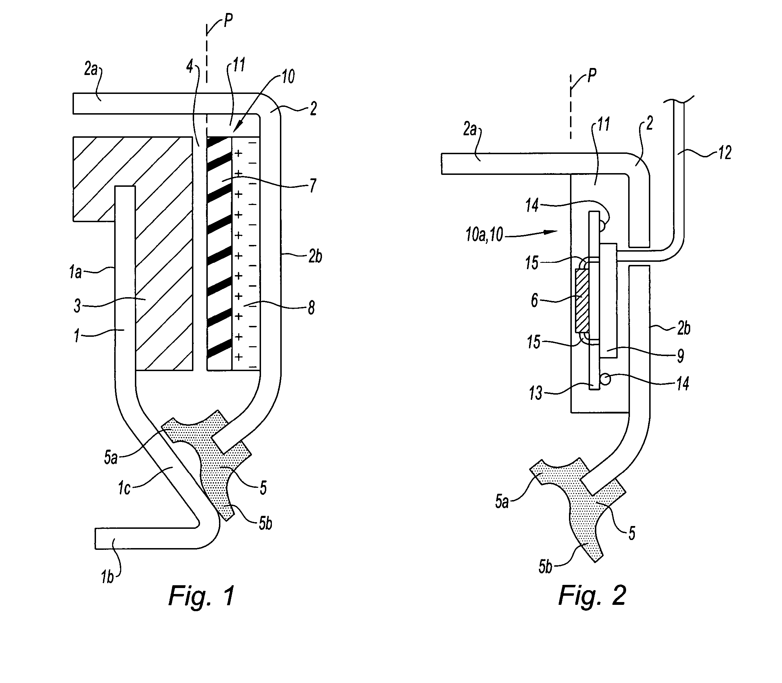

Comme représenté sur la figure 2, le module 10 comprend une ouverture angulaire 10a dans laquelle le capteur 6 et le dispositif de communication 9 sont disposés. En particulier, le capteur 6 et le dispositif de communication 9 peuvent être intégrés dans un circuit imprimé 13 (par exemple de type ASIC), ledit circuit étant intégré au module 10 en étant alimenté en énergie par le dispositif de stockage 8.

Le capteur 6 et le dispositif de communication 9 représentés sont formés respectivement d'un côté du circuit imprimé 13. Plus précisément, le capteur 6 est formé du côté interne avec les éléments sensibles disposés sensiblement dans le plan interne P du module 10, de sorte à réduire la distance d'entrefer avec le codeur 3. Le dispositif de communication 9 est formé du côté externe pour que l'antenne 12 puisse s'étendre au travers de l'armature externe 2.

Dans cette réalisation, la connectique entre le dispositif de stockage 8 et le dispositif de communication 9 est formée du côté externe du circuit imprimé 13, l'alimentation du capteur 6 étant réalisée au travers dudit circuit. Pour ce faire, un fil d'alimentation 14 est formé entre le circuit imprimé 13 et chaque bord de l'ouverture 10a formée dans la couche de stockage 8, et les fils d'alimentation 15 du capteur 6 traversent ledit circuit.

## Revendications

1. Joint d'étanchéité instrumenté pour un palier, ledit joint comprenant une armature interne (1) destinée à être associée à un organe tournant du palier et une armature externe (2) destinée à être associée à un organe fixe dudit palier, lesdites armatures formant entre elles un espace annulaire (4) dans lequel un codeur magnétique (3) est associé à l'armature interne (1), ledit joint comprenant un élément d'étanchéité (5) qui est associé à l'une des armatures (1, 2) pour être en contact frottant sur une portée complémentaire (1 c) de sorte à pouvoir étanchéifier un côté de l'espace annulaire (4), ledit joint étant **caractérisé en ce que** l'espace annulaire (4) intègre en outre, associé à l'armature externe (2), un système autonome de mesure des signaux délivrés par le codeur (3), ledit système comprenant un dispositif (7) de génération d'énergie électrique induite par la rotation du codeur (3), un dispositif (8) de stockage de ladite énergie électrique, un capteur (6) alimenté en énergie électrique générée qui comprend des éléments sensibles disposés à distance de lecture du codeur (3), et un dispositif (9) de communication sans fil des signaux issus du capteur (6).

2. Joint d'étanchéité instrumenté selon la revendication 1, **caractérisé en ce que** le système autonome de mesure comprend un module annulaire (10) qui est associé sur la face interne d'une paroi annulaire radiale (2b) de l'armature externe (2).

3. Joint d'étanchéité instrumenté selon la revendication 2, **caractérisé en ce que** le dispositif de communication (9) comprend une antenne (12) qui traverse la paroi radiale (2b).

4. Joint d'étanchéité instrumenté selon la revendication 3, **caractérisé en ce que** l'antenne (12) est imprimée sur une bande flexible longiligne.

5. Joint d'étanchéité instrumenté selon l'une quelconque des revendications 1 à 4, **caractérisé en ce que** l'association du système autonome est réalisée par surmoulage dudit système sur l'armature externe (2) au moyen d'une résine (11).

6. Joint d'étanchéité instrumenté selon l'une quelconque des revendications 2 à 5, **caractérisé en ce que** le module annulaire (10) comprend la superposition axiale d'une couche annulaire (8) formant dispositif de stockage d'énergie et d'une couche annulaire (7) formant dispositif de génération d'énergie, ladite couche formant dispositif de génération d'énergie étant disposée axialement en regard du codeur (3).

7. Joint d'étanchéité instrumenté selon l'une quelconque des revendications 2 à 6, **caractérisé en ce que** le module (10) comprend une ouverture angulaire (10a), le capteur (6) et le dispositif de communication (9) étant disposés dans ladite ouverture.

8. Joint d'étanchéité instrumenté selon la revendication 7, **caractérisé en ce que** les éléments sensibles sont disposés sensiblement dans le plan interne (P) du module (10).

9. Joint d'étanchéité instrumenté selon la revendication 7 ou 8, **caractérisé en ce que** le capteur (6) et le dispositif de communication (9) sont intégrés dans un circuit imprimé (13), ledit circuit étant intégré au module (10) en étant alimenté en énergie par le dispositif (8) de stockage d'énergie.

10. Joint d'étanchéité instrumenté selon la revendication 9, **caractérisé en ce que** le capteur (6) et le dispositif de communication (9) sont formés respectivement du côté interne et du côté externe du circuit imprimé (13).

11. Joint d'étanchéité instrumenté selon l'une quelconque des revendications 1 à 10, **caractérisé en ce que** l'élément d'étanchéité (5) est associé à l'armature externe (2) pour être en contact frottant sur une portée (1c) de l'armature interne (1).

12. Palier à roulement comprenant un organe fixe, un organe tournant et des corps roulants disposés dans un espace de roulement formé entre lesdits organes pour permettre leur rotation relative, ledit palier étant équipé d'au moins un joint d'étanchéité instrumenté selon l'une quelconque des revendications 1 à 11, l'armature interne (1) étant associée à l'organe tournant et l'armature externe (2) étant associée à l'organe fixe.
